# EUROPEAN PATENT SPECIFICATION

(11) **EP 1 148 036 B1**
(45) Date of publication and mention of the grant of the patent: **02.03.2005**
(21) Application number: 01109411.7
(22) Date of filing: 20.04.2001
(51) Int. Cl.: C03C 17/245, C03C 23/00, C04B 41/50, C04B 41/52, C03C 17/34

(54) **Method for modifying the surface of a compact substrate**
Verfahren zum Modifizieren einer Oberfläche eines kompakten Substrates
Méthode de modification de la surface d'un substrat compact

(30) Priority: 20.04.2000 DE 10019926
(43) Date of publication of application: 24.10.2001
(73) Proprietor: ISIMAT GmbH SIEBDRUCKMASCHINEN, 73479 Ellwangen (DE)
(72) Inventor: Detzner, Peter, 73479 Ellwangen (DE)
(74) Representative: Gleiss, Alf-Olav, Dr.jur. Dipl.-Ing.

(56) References cited:
- EP-A- 0 594 171
- WO-A-99/20574
- DD-A- 236 516

## Description

Die Erfindung betrifft ein Verfahren zum Modifizieren einer Oberfläche eines kompakten Substrates, insbesondere Glas, Keramik und/oder Porzellan sowie mit dem Verfahren gewonnene Substanzen.

Kompakte Substrate oder Materialien werden im Haushalt, im gewerblichen Bereich sowie in Forschung und Entwicklung eingesetzt. Die natürliche Oberfläche der kompakten Substrate ist für eine Vielzahl von Anwendungen jedoch aufgrund von heterogenen Strukturierungen oder der Porösität nicht geeignet.

Es ist bekannt, die Oberfläche der kompakten Substrate biologisch, chemisch oder physikalisch zu modifizieren. Die Modifizierung kann beispielsweise mit Ölen, Wachsen und Lacken erfolgen oder durch radioaktive Strahlung, mit Sandstrahlen oder durch Beschichtung mit Biomolekülen. Im industriellen und gewerblichen Bereich kommt vor allem die chemische Modifizierung zum Einsatz. Im Falle der chemischen Modifizierung wird die Oberfläche der amorphen Substanz mittels Flüssigkeiten, wie beispielsweise starken Säuren und Basen, behandelt.

Maßgebend für die Beschichtung ist die physikochemische Konstitution der Grenzfläche beziehungsweise der Grenzphase, die modifiziert werden soll. Bekannte Maßnahmen sind Säurebäder, Wachsumhüllungen, das Beflammen, beziehungsweise die Plasma- oder Corona-Vorbehandlung beispielsweise von unpolaren Kunststoffen. Die Oberfläche kann jedoch auch durch das Aufbringen von haftvermittelnden Schichten wie zum Beispiel Konversionsschichten modifiziert werden.

Die DD 236 516 A1 offenbart ein Verfahren zur Erzeugung transparenter, elektrisch leitfähiger Modifizierungen auf silikatischen Substraten.

Die DE-PS 35 11 720 beschreibt ein Verfahren, bei dem Glasscheiben dadurch hydrophiliert werden, dass die Glasscheiben in mehreren Schritten mit einem flüssigen alkalischen Phosphat-Reiniger und einer phosphorsäurehaltigen Lösung behandelt werden.

In der US 5,585,153 wird ein Verfahren offenbart, bei dem eine Druckfarbe zusammen mit einem Silanhaftvermittler direkt auf eine Glasoberfläche aufgetragen wird.

Im Falle von Glas, Keramik, Porzellan oder Kristallen kann die Oberfläche jedoch so beschaffen sein, dass aufgrund der Oberflächenenergie eine Modifizierung der Oberfläche mittels flüssiger Substanzen nur bedingt oder überhaupt nicht möglich ist. Die Oberflächenenergie und die Polarität der Oberfläche der sind kritische Größen für eine Benetzung mit Flüssigkeiten und den gesamten Verlauf der Oberflächenbehandlung sowie für die anschließende Haftung der aufgebrachten, modifizierenden Schichten.

Die EP 0 594 171 B1 beschreibt ein Verfahren und eine Vorrichtung zum Modifizieren der Oberflächenaktivität eines Silicatglassubstrates. Durch Aufbringen einer siliciumhaltigen Beschichtung wird mittels eines pyrolytischen Prozesses eine Hydrophilierung des Silicatglassubstrates erreicht. Durch diesen Modifizierungsprozess des Silicatglases sind Folgereaktionen, wie beispielsweise Beschichtungen mit Lacken möglich.

Aus der AT-PS 381 693 ist ein Verfahren bekannt, bei dem der Oberfläche eines Silikatglassubstrates hydrophile Eigenschaften verliehen werden, indem auf die Oberfläche des Substrates eine Sulfonato-Organosilanol-Verbindung aufgebracht und anschließend getrocknet wird.

Die DD 232 429 A1 und DD 236 758 A1 offenbaren Verfahren, bei denen mit Hilfe von Flammhydrolysebrennern metallische Dentalprothesenteile mit silicidmoxid in normaler Luftatmosphäre beschichtet werden.

Mit dem im Stand der Technik offenbarten Verfahren zur Behandlung von Oberflächen kompakter Substrate, insbesondere Glas, Keramik, Porzellan und andere, ist es nicht möglich, homogene Oberflächeneigenschaften mit hoher Reproduzierbarkeit zu erzeugen. Das liegt vor allem daran, dass das direkte Aufbringen beispielsweise einer Siliciumoxidschicht immer von der Struktur der Oberfläche des zu behandelnden kompakten Substrats abhängt. Auf der Oberfläche sind natürlicherweise lokale Verdichtungen oder chemische Modifikationen dergestalt vorhanden, dass die Siliciumoxidschicht in bestimmten Bereichen besser gebunden wird als in anderen Bereichen, was zu einer inhomogenen Beschichtung führt.

Nachteilig wirkt sich bei dem direkten Aufbringen von Druckfarbe und Silanhaftvermittler aus, dass bei dieser Modifizierung der Oberfläche eine reaktive Wechselwirkung mit den natürlichen OH-Gruppen der Oberfläche und dem Silanhaftvermittler stattfindet. Somit beeinflussen alle unreproduzierbaren Inhomogenitäten der Oberflächen die Verbundeigenschaften und bedingen so eine unbefriedigende Haftung der modifizierenden Schichten auf der Oberfläche.

Die chemische Behandlung der Oberflächen von Glas, die mit dem Ziel durchgeführt wird, eine einheitlich strukturierte, homogene Oberfläche zu erhalten, ist deshalb nachteilig, da solche Verfahren nur nach dem Zerteilen des Glasbandes in einzelne Glasscheiben in einem Tauchverfahren angewandt werden können. Das Tauchverfahren erfordert einen hohen apparativen Aufwand. Die hydrophilierende Beschichtung weist außerdem organische Bestandteile auf, die mit den aufzubringenden Schichten in unerwünschter Weise wechselwirken. Wenn die behandelte Oberfläche Teil eines Behältnisses oder Teil eines Rohres ist, können daher unerwünschte Interaktionen mit den in den Behältnissen gelagerten Lösungen oder durch das Rohr geführten Flüssigkeiten auftreten.

Bei glasartigen, kompakten Substraten treten weiterhin Probleme wegen der an der Oberfläche gebundenen Feuchtigkeit auf. Die Feuchtigkeit wird in Form von Gelschichten gebunden, die die Hafteigenschaften der aufzubringenden Schichten negativ beeinflussen. Mit dem im Stand der Technik bekannten Verfahren ist es nicht möglich, die Gelschicht homogen und reproduzierbar zu reduzieren.

Die Qualität der Modifizierung der Oberfläche hängt auch von den aufgebrachten oder erzeugten reaktiven Gruppen ab, da diese die Grundlage für die feste Bindung der nachfolgend aufgebrachten Schichten sind. Die Dichte der in der Silikatschicht befindlichen reaktiven OH-Gruppen ist bei den bekannten Verfahren nicht ausreichend, was zu einer verminderten Haftung der folgend aufgebrachten Schichten führt.

Das der vorliegenden Erfindung zugrundeliegende technische Problem besteht also darin, ein Verfahren bereitzustellen, mit dem die Oberflächen von kompakten Substraten so behandelt werden, dass reproduzierbare, homogenisierte Oberflächen erzeugt werden, die eine hohe Dichte an reaktiven OH-Gruppen aufweisen und wobei eine mikroretentive Oberfläche durch Verringerung der Gelschicht aufgebaut wird.

Die Erfindung löst das ihr zugrundeliegende Problem durch die Bereitstellung eines Verfahrens zum Modifizieren einer Oberfläche eines kompakten Substrats, das die folgenden Schritte umfasst:
- Modifizierung der Oberfläche mit mindestens einer oxidierenden Flamme,
- Modifizierung der so erzeugten Oberfläche in einem zweiten Schritt mit mindestens einer silikatisierenden Flamme und
- Aufbringung mindestens einer Druckfarbe auf die Oberfläche.

Durch die kombinierte Behandlung der Oberfläche mit mindestens einer oxidierenden und mindestens einer silikalisierenden Flamme wird eine homogene, mikroretentive Oberfläche bereitgestellt, die eine hohe Dichte an reaktiven Gruppen aufweist und besonders gut bedruckbar ist.

Das erfindungsgemäße Verfahren weist den Vorteil auf, dass die an die Oberfläche des kompakten Substrates in Form von nicht homogenen Gelschichten gebundene Feuchtigkeit reduziert wird.

Überraschenderweise wird durch das erfindungsgemäße Verfahren die Gelschicht reproduzierbar reduziert. Die Gelschicht ist von der jeweiligen Struktur des Substrats wie auch von dem Alterungszustand der Gelschicht abhängig. Durch die oxidierende Flamme wird in einem ersten Verfahrensschritt die Gelschicht und somit die gebundene Feuchtigkeit reduziert. Die Reduktion der Gelschicht führt zu reproduzierbaren, homogenen Oberflächeneigenschaften.

Auf die so erzeugte Oberfläche wird in einem zweiten Schritt mittels einer silikalisierenden Flamme eine bis zu 60 nm, vorzugsweise 5 bis 50 nm, insbesondere 10 bis 30 nm dicke Siliciumoxidschicht aufgebracht, die sich durch einen hohen Gehalt an reaktiven OH-Gruppen auszeichnet. Die Homogenität und die guten Haftungseigenschaften der aufgetragenen Siliciumoxidschicht werden durch die Kombination aus dem ersten und zweiten Verfahrensschritt erreicht. Vorteilhaft ist es, die Flammenanzahl so zu wählen, dass 1 bis 5 oxidierende und silikatisierende Flammen die Oberfläche modifizieren. Vorzugsweise weisen die Flammen eine Temperatur von 900° bis 1200 °C auf; die kompakte Substanz wird vorteilhafterweise auf 50 bis 100 °C erwärmt. Mit Vorteil beträgt die Dauer der Beflammung 0,1 s bis 5, bevorzugt 0,1 s bis 1 s.

Die reaktiven Gruppen sind die chemische Grundlage für eine feste chemische Anbindung der nachfolgend aufgebrachten oberflächenbehandelnden Schichten, beispielsweise Wachs-, Lack- oder Farbschichten.

Wenn das kompakte Substrat eine amorphe Substanz beispielsweise Glas ist, liegt die Flächendichte der OH-Gruppen der Oberfläche des erfindungsgemäßen kompakten Substrates um den Faktor 2 bis 5 höher als bei nicht behandelten Oberflächen.

Die im zweiten Behandlungsschritt aufgebrachte Siliciumoxid- beziehungsweise Silikatschicht besitzt eine submikroskopische Rauhigkeit. Die Rauhigkeit und die damit verbundene mechanische Verankerungmöglichkeit für weitere Schichten führt zu einer deutlich verbesserten Haftung aller folgenden Schichten. Durch den oxidierenden und den silikatisierenden Verfahrensschritt wird eine reproduzierbare, homogene, mikroretentive Oberfläche erzeugt. Die Kombination der beiden Verfahrensschritte führt überraschend zu einer Reduzierung der Gelschicht und zu einer Erhöhung der Dichte und zu einer homogen Verteilung der reaktiven OH-Gruppen.

Unter einer oxidierenden Flamme im Sinne der Erfindung wird jedes entzündete Gas, Gas-Luftgemisch, Aerosol oder Spray verstanden, das überschüssigen Sauerstoff enthält und/oder oxidierend wirken kann.

Unter einer silikatisierenden Flamme im Sinne der Erfindung wird jedes entzündete Gas, Gas-Luftgemisch, Aerosol oder Spray verstanden, mit dessen Hilfe durch flammenpyrolytische Zersetzung einer siliciumhaltigen Substanz eine Siliciumoxidschicht auf eine Oberfläche aufgebracht wird. Es kann insbesondere vorgesehen sein, dass die siliciumhaltige Beschichtung im Wesentlichen kohlenstofffrei augebracht wird und dass bei der Flammenpyrolyse als Silicium-haltige Substanz ein Silicium-Alkoxisilan in eine Mischung von Luft- und Brenngas sowie bedarfsweise Sauerstoff eingeleitet wird. Das Brenngas umfasst beispielsweise Propan-, Butan-, Leuchtgas und/oder Erdgas.

Wird auf die Oberfläche eines vorzugsweise als amorphe Substanz gewählten Substrats mindestens eine Druckfarbe aufgebracht, führen die Rauhigkeit und die guten Hafteigenschaft der Silikatschicht dazu, dass die Druckfarbe sehr gut haftet. Das direkte Bedrucken der Oberfläche der Substanzen führt zu einer Senkung der Energiekosten gegenüber den bisherigen Verfahren der Bedruckung mit keramischen Farben und anschließendem Einbrennen in einem Durchlaufofen. Vorteilhafterweise sind die auf die Silikatschicht aufgebrachten Farben kratz- und abriebbeständig und haben eine hohe Wasser- und Wasserdampfbeständigkeit. Durch die erzeugte homogene Silikatschicht wird mit Vorteil eine sehr hohe Farbdeckung der aufgebrachten Druckfarben erreicht.

Die Eigenschaften der Druckfarbe wie Buntton, Farbstärke, Metamerie, Deckvermögen und Transparenz können vorteilhafterweise durch die erfindungsgemäße Oberfläche nahezu frei gewählt werden.

Bei einem weiteren vorteilhaften Ausführungsbeispiel der Erfindung ist die Druckfarbe flüssig, pastös, pulverförmig oder liegt als Aerosol oder Spray vor. Die Aerosole können vorteilhafterweise als Staube oder Rauche beziehungsweise als Nebel vorliegen. Vorteilhaft ist es, die Aerosolteilchen elektrisch aufzuladen, um sie so spezifisch an die modifizierte Oberfläche zu binden. Das Aerosol kann mit Vorteil auch mit einem Treibgas als sogenannten Spray auf die zu behandelnde Oberfläche aufgebracht werden.

Bei einem weiteren vorteilhaften Ausführungsbeispiel der Erfindung wird die mindestens eine Druckfarbe im Siebdruck-, Flachdruck-, Tiefdruck-, Offsetdruck-, Rollen-Flexodruck- und/oder Hochdruckverfahren aufgebracht. Das Aufbringen der mindestens einen Druckfarbe kann vorteilhafterweise mit einer direkten oder indirekten Einfärbung oder durch fotomechanische, elektrostatische Druckverfahren erfolgen. Vorteilhaft sind Druckverfahren mit dem Druck von einer Druckform, deren druckende Teile erhaben sind, Druckverfahren mit dem Druck von einer Druckform, deren druckende und nicht druckende Teile praktisch in einer Ebene liegen, Druckverfahren mit dem Druck von einer Druckform, deren druckende Teile vertieft sind und Druckverfahren mit dem Druck durch eine Druckform, die aus einer Schablone aus einem farbdurchlässigen Material besteht. Mit Vorteil werden die Druckfarben in einem Durchdruckverfahren aufgebracht, bei welchem die druckenden Stellen der Druckform druckfarbendurchlässig sind. Bei dem Durchdruckverfahren wird die Druckfarbe beispielsweise durch ein siebförmiges Gewebe einer Druckform gepresst und auf das zu bedruckende Material übertragen. Das direkte Druckverfahren des Durchdruckverfahrens umfasst im Sinne der Erfindung insbesondere das Siebdruckverfahren und das elektrostatische Durchdruckverfahren.

Bei einem weiteren vorteilhaften Ausführungsbeispiel wird die Druckfarbe ausgewählt aus der Gruppe umfassend anorganische Pigmente, Metallpigmente, Indifferenzpigmente, organische Pigmente, organisch lösliche Farbstoffe und/oder UV-Farbstoffe. Die Pigmente können vorteilhafterweise synthetisch hergestellte oder natürlich vorkommende mineralische, organische, pflanzliche oder tierische Pigmente sein. Die anorganischen Pigmente umfassen unter anderem Titanweiß, Eisenoxidpigmente oder Bleichromate und Bleimolybdate. Die Metallpigmente oder die sogenannten Bronzen umfassen beispielsweise Aluminium, Messing-Pulver oder Kupferbronzen und andere. Indifferenzpigmente im Sinne der Erfindung sind beispielsweise Perlmut-, Perlglanzpigmente und feuergefärbte Bronzen. Für schwarze Druckfarben werden vorteilhafterweise Kohlenstoffpigmente, vorzugsweise aus reinem Kohlenstoff verwandt. Die organischen Pigmente zeichnen sich vorteilhafterweise durch eine hohe Farbstärke, reine Farbtöne, Transparenz, Lasur und geringe Dispergierhärte, Lichtechtheit, Hitzebeständigkeit, Überlackierechtheit und Chemikalienbeständigkeit aus. Die organisch löslichen Farbstoffe sind vorteilhafterweise sehr rein und besitzen eine hohe Farbstärke. Die UV-Farben sind mit Vorteil bei relativ geringem Energieeinsatz sehr schnell unter UV-Licht auszuhärten. Außerdem ist bei der Verwendung von UV-Farben vorteilhafterweise eine hohe Druckgeschwindigkeit und Rasterauflösung und damit eine sehr effiziente wirtschaftliche Produktion von zu bedruckenden Oberflächen erreichbar.

Bei einem besonders vorteilhaften Ausführungsbeispiel der Erfindung sind die organischen Pigmente ausgewählt aus der Gruppe umfassend Azopigmente, Isoindulin-Pigmente, Phthalocyanin-Pigmente, polycyclische Spezialpigmente, Salze basischer Farbstoffe, Lumineszenzpigmente, Tagesleuchtpigmente und/oder nachleuchtende Pigmente. Die organischen Pigmente besitzen vorteilhafterweise gute Farbechtheit, Lichtechtheit, Beständigkeit, Brillanz, hohe Farbstärke, hohe Farbintensität und sind preisgünstig einzusetzen. Mit Vorteil können die Farbpigmente als Schönungsmittel, zur Warenkennzeichnung, zu Werbezwecken oder beispielsweise für Broncier-Effekte eingesetzt werden.

Nach einem weiteren vorteilhaften Ausführungsbeispiel der Erfindung sind die Druckfarben mit Füllstoffen ausgewählt aus der Gruppe umfassend Calciumcarbonat, Aluminiumoxidhydrat, Bariumsulfat, Siliciumdioxid, Aluminiumsilicat und/oder Magnesiumsilicat versetzt. Füllstoffe im Sinne der Erfindung sind Stoffe, die die Viskosität der Druckfarben erhöhen, ohne gleichzeitig die Zügigkeit zu steigern. Mit Vorteil verhindern die Füllstoffe das Absetzen der Pigmente bei beispielsweise flüssigen Farben oder das Eindringen der Farben bei porösen Oberflächen sowie das Verblocken und Abliegen in der Rolle oder im Stapel. Im Sinne der Erfindung sind unter Füllstoffen jedoch auch Bindemittel, Lösemittel, Verdünnungsmittel und Additive zu verstehen. Die Bindemittel, wie beispielsweise Harze oder Öle, umhüllen vorteilhafterweise die Farbpigmente beim Dispergierprozess zur feinsten Kornverteilung in einer Dispersion oder zum Lösen der Farbstoffe. Mit Vorteil beeinflussen die Bindemittel den Transport der Pigmente beispielsweise in der Druckmaschine oder bei der Farbübertragung sowie die Verankerung der Pigmente auf der Oberfläche nach dem Trocknen. Die Lösemittel, zu denen beispielsweise Kohlenwasserstoffe, Mineralöle, Alkohole, Glycole, Glycolether, Ester, Ketone, Wasser, Aceton, Benzin, Butanon, Cyclohexanon, Toluol, Xylol, Benzol, Ethanol und/oder pflanzliche Öle gehören, stellen vorteilhafterweise eine definierte Druckfarbenviskosität ein. Mit Vorteil bestimmen die Lösemittel durch die Verdunstungsgeschwindigkeit die Trocknung, vor allem bei Tief-, Flexo-, Sieb- und Tampondruckfarben und Offsetfarben. Vorteilhafterweise können den Lösemitteln sogenannte Nichtlöser zur Trocknungsregulierung und als Schleppmittel zur Reduzierung von Restlösemitteln im Druckfilm zugegeben werden. Additive im Sinne der Erfindung sind alle Substanzen, die zugesetzt werden, um gezielte Druckfarbeneigenschaften zu bewirken. Vorteilhafterweise können beispielsweise Wachse zur Erhöhung der Gleitfähigkeit, der Scheuerfestigkeit und der Wasserfestigkeit eingesetzt werden. Die Abriebfestigkeit, die Blockfestigkeit und die Erhöhung der Oberflächenglätte wird mit Vorteil mittels Fettsäureamiden verbessert. Zu den Additiven im Sinne der Erfindung gehören beispielsweise auch Weichmacher, Trockenstoffe, Trocknungsverzögerer, Netzmittel, Neutralisationsmittel, Vernetzer, Fotoinitatoren, Antischaummittel und Komplexbildner.

Bei einem weiteren vorteilhaften Ausführungsbeispiel der Erfindung ist die amorphe Substanz ein Glas, eine Schmelze, eine Glaskeramik, eine Keramik und/oder ein Kristall oder ein beliebiger Feststoff dessen Oberfläche mit Glas, einer Schmelze, Glaskeramik, Keramik und/oder einem Kristall beschichtet ist. Amorphe Substanzen im Sinne der Erfindung sind Substanzen, bei denen im molekularen Aufbau eine Nahordnung, aber keine Fernordnung erhalten ist. Daher ähneln sie im Aufbau den Flüssigkeiten und können somit als Flüssigkeit mit extrem hoher Viskosität oder unterkühlte Flüssigkeiten aufgefasst werden. Zu den amorphen Substanzen gehören beispielsweise amorphe Metalle, amorphes Silicium, Glas, Schmelzen, Glaskeramik und andere. Glas im Sinne der Erfindung umfasst jedes anorganische, vorzugsweise oxidisches Schmelzprodukt, das durch einen Einfriervorgang in einen festen Zustand überführt wird. Im Sinne der Erfindung ist Glas jedoch auch organisches Glas, wie beispielsweise Acrylglas oder Zellglas und ähnliches; das heißt, das Ausbleiben der Auskristallisation der Schmelzphasenkomponenten ist kein notwendiges Charakteristikum für Gläser im Sinne der Erfindung. Glaskeramik im Sinne der Erfindung sind polykristalline Festkörper, die durch Keramisierung, das heißt vorteilhafterweise durch gesteuerte Entglasung, von Gläsern hergestellt werden können. Sie entstehen mit Vorteil durch Wärmebehandlung eines geeigneten Glases, in welchem Kristalle erzeugt werden. Vorteilhafterweise kann die Kristallisation auch durch Strahlung initiiert werden. Die glaskeramischen Substanzen enthalten vorteilhafterweise ebenso wie keramische Substanzen noch einen Anteil an Glasphase neben den Kristallen. Im Sinne der Erfindung ist unter einer Glaskeramik auch eine polykristalline kieselsäurefreie Substanz aus reinen Oxiden oder Oxidverbindungen zu verstehen, der Sinterhilfsmittel oder Stabilisatoren zugesetzt sind, um vorteilhafterweise die Herstellung zu erleichtern oder um definierte Eigenschaften zu erzielen. Die polykristallinen kieselsäurefreien Substanzen werden mit Vorteil nach keramischen Methoden hergestellt.

Die amorphe Substanz kann mit Vorteil auch eine Substanz sein, die aus Tonmineralien, aus Carbiden, Nitriden, Oxiden und Siliciden beispielsweise mit dem Verfahren der Pulvermetallurgie hergestellt ist. Erzeugnisse der aus Tonmineralien hergestellten Substanzen können beispielsweise Keramik, Laborporzellan, Knochenporzellan, Dauermagnetwerkstoffe, Silicasteine und/oder Magnesiasteine wie auch Wandfliesen, Töpfermassen und andere sein.

Vorteilhafterweise kann das Glas, die Schmelze, die Glaskeramik, die Keramik und/oder der Kristall als Beschichtung eines beliebigen Feststoffes oder Werkstoffes ausgebildet sein.

Die Oberfläche eines beliebigen Feststoffes oder Werkstoffes kann vorteilhafterweise auch aus einem glasartig erstarrten Schmelzgemisch mit überwiegend oxidischer Zusammensetzung bestehen, wobei der beliebige Feststoff aus Metall oder Glas ist. Derartige auch als Emaille bezeichnete Schmelzgemische sind vorteilhafterweise chemisch, thermisch und mechanisch sehr widerstandsfähig.

Bei einem weiteren vorteilhaften Ausführungsbeispiel ist der Feststoff die Oberfläche eines PET-Produktes.

Bei einem weiteren bevorzugten Ausführungsbeispiel der Erfindung ist das PET-Produkt eine Flasche.

Bei einem besonders vorteilhaften Ausführungsbeispiel der Erfindung ist die amorphe Substanz ein Kalkglas, Borosilicat-Glas, Natron-Silicat-Glas, Silicat-Glas und/oder ein Silicat-freies Glas, insbesondere ein Phosphat-Glas. Vorteilhafterweise besteht die amorphe Substanz aus abgekühlten Schmelzen aus Siliciumdioxid, Calciumoxid, Natriumoxid, insbesondere mit Anteilen Bortrioxid, Aluminiumoxid, Bleioxid, Magnesiumoxid, Bariumoxid, Caliumoxid und anderen.

Bei einem weiteren vorteilhaften Ausführungsbeispiel ist das Glas ein Flachglas, ein Behälterglas, ein Hohlglas, ein Wirtschaftsglas, ein Glühlampenglas, ein Fernsehkolbenglas, ein Laborgeräteglas, ein Bleikristallglas, ein Faserglas, ein Schmuckglas, ein Mattglas, ein Milchglas, ein Farbglas, ein Dekorationsglas und/oder ein optisches Glas.

Weitere vorteilhafte Ausführungsbeispiele der Erfindung ergeben sich aus der Beschreibung.

Die Erfindung wird im Folgenden anhand einer Zeichnung näher erläutert. Es zeigen:
- Figur 1: eine schematische Ansicht eines Brenners und einer amorphen Substanz,
- Figur 2: eine schematische Ansicht der amorphen Substanz mit zwei Brennern,
- Figur 3: eine schematische Ansicht der amorphen Substanz mit drei Brennern und
- Figur 4: eine schematische Ansicht eines Hohlkörpers und zwei Brennern.

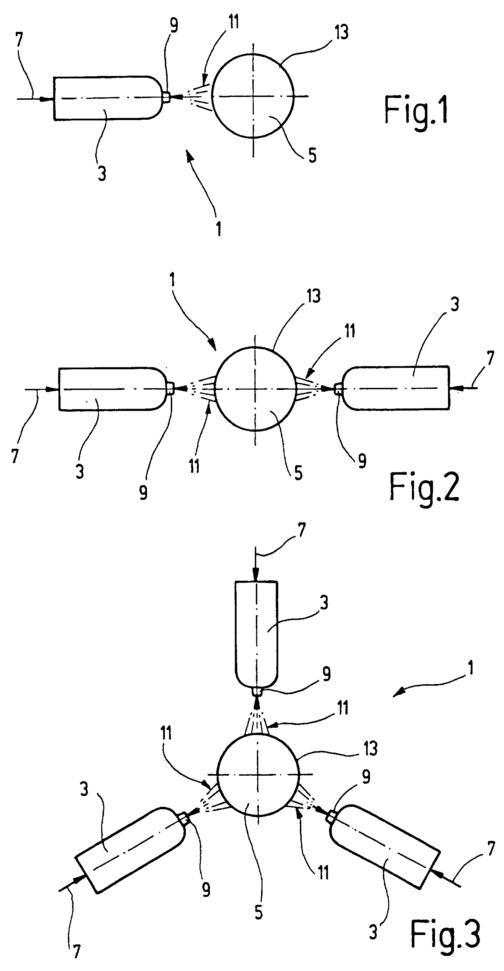

Figur 1 zeigt eine Oberflächenmodifizierungseinheit 1, die einen Brenner 3 umfasst und ein kompaktes Substrat 5. Dem Brenner 3 werden über nicht dargestellte Zuführleitungen gemäß einem Pfeil 7 Brenngase, Luft und bedarfsweise Silicium-organische Substanzen zugeführt. Das Brenngas umfasst Propan-, Butan-, Leuchtgas und/oder Erdgas. Die Brenngase, die Luft sowie die anderen Substanzen werden über eine Düse 9 in Form eines Verbrennungsgemisches 11 auf eine Oberfläche 13 des kompakten Substrates 5 aufgebracht. In einem ersten Schritt wird in den Brenner 3 gemäß Pfeil 7 ein Brenngas-/Luftgemisch geleitet, das beim Austritt aus der Düse 9 als Verbrennungsgemisch 11 mit einem Anteil an überschüssigem Sauerstoff verbrennt. Das Verbrennungsgemisch 11 wirkt deshalb oxidierend. Es kann vorgesehen sein, dass jeweils einem Brenner 3 eine Düse 9 zugeordnet ist, es ist jedoch auch möglich, dass jeweils einem Brenner 3 beispielsweise mehrere hintereinander angeordnete Düsen zugeordnet sind. Das oxidierende Verbrennungsgemisch 11 oxidiert und desorbiert organische Verunreinigungen sowie anhaftende Feuchtigkeitsschichten auf der Oberfläche 13. Das kompakte Substrat 5 hat einen rotationssymmetrischen Querschnitt. Das kompakte Substrat 5 befindet sich während des Vorgangs der oxidierenden Beflammung in rotierender Bewegung. Es kann jedoch auch vorgesehen sein, dass der Brenner 3 um das kompakte Substrat 5 rotiert. Die Oberfläche 13 wird mit einer Geschwindigkeit von bis zu 70 m/min rotierend unterhalb des Brenners 3 bewegt.

In einem zweiten Verfahrensschritt wird in den Brenner 3 ein Luftbrenngasgemisch eingeleitet, das Tetramethoxysilan umfasst. Das Tetramethoxysilan wird dem Brenngasluftgemisch in einem Molverhältnis von 10⁻² bis 10⁻⁶ zugesetzt. Das Volumenverhältnis von Brenngas zu Luft beträgt 1-3 bis 1-80. Das Gemisch verlässt die Düse 9 als Verbrennungsgemisch 11 in Form einer silikatisierenden Flamme. Während dieses Prozesses der sogenannten Flammenpyrolyse erfolgt eine SiOₓ-Beschichtung auf der Oberfläche 13. Mittels mehrerer aufeinander folgender flammenpyrolytischer Behandlungen werden mehrere, mindestens jedoch eine Einzelschicht SiOₓ auf die Oberfläche 13 aufgebracht. Die siliciumhaltige Beschichtung weist hierbei, je nach Anzahl der Schichten, eine Stärke von 1 bis 100 nm auf. Durch die langsame Rotationsbewegung von bis zu 70 m/min des kompakten Substrat 5 erfolgt eine nahezu gleichmäßige siliciumhaltige Beschichtung, wodurch die Oberfläche 13 gleichmäßig hydrophiliert wird. Die Silicatschicht zeichnet sich durch einen hohen Gehalt an reaktiven OH-Gruppen aus. Die Dichte der OH-Gruppen ist auf der gesamten Oberfläche 13 nahezu gleich, da durch die oxidierende Behandlung im ersten Verfahrensschritt eine homogenisierte Oberfläche 13 für den zweiten Verfahrensschritt bereitgestellt wird.

Figur 2 zeigt eine Oberflächenmodifizierungseinheit 1 nach einem weiteren Ausführungsbeispiel, das im Wesentlichen so aufgebaut ist wie die Oberflächenmodifizierungseinheit 1 gemäß Figur 1. Insoweit wird auf die vorstehende Beschreibung verwiesen und im Nachstehenden nur noch auf die Unterschiede eingegangen. Im Gegensatz zum Ausführungsbeispiel gemäss Figur 1, umfasst die anhand von Figur 2 erläuterten Oberflächenmodifizierungseinheit 1 zwei Brenner 3. Die Brenner 3 sind so angeordnet, dass sie auf einer gemeinsamen gedachten Linie liegen, die durch den Mittelpunkt des kompakten Substrates 5 verläuft. Die Brenner 3 weisen jeweils den gleichen Abstand zu der Oberfläche 13 auf. Der Abstand zwischen Düse 9 und Oberfläche 13 beträgt 3 bis 15 cm. Die beiden Brenner 3 können hierbei so mit Brenngasen versorgt werden, dass der eine Brenner oxidierend und der andere ein silikatisierend behandelt. Es kann jedoch auch vorgesehen sein, dass beide Brenner 3 die Oberfläche 13 in einem ersten Schritt mit einer oxidierende Flamme und in einem zweiten Schritt mit einer silikalisierenden Flamme die modifizieren. Die amorphe Substanz bewegt sich mit einer Rotationsgeschwindigkeit von bis zu 70 m/min um die eigene Achse. Während der Rotation wird die Oberfläche 13 flammenpyrolytisch gleichmäßig behandelt.

Figur 3 zeigt ein weiteres Ausführungsbeispiel einer Oberflächenmodifizierungseinheit 1, die weitestgehend gleich wie die Oberflächenmodifizierungseinheit 1 gemäss der Figur 2 ausgebildet ist. Unterschiedlich ist lediglich, dass statt zwei Brennern 3, drei Brenner 3 radial um das kompakte Substrat 5 angeordnet sind. Die Brenner 3 können so um das kompakte Substrat 5 angeordnet sein, dass der Winkel zwischen der Mittelachsen der Brenner 3 jeweils 120° beträgt; es ist jedoch auch jede andere Anordnung der Brenner 3 möglich.

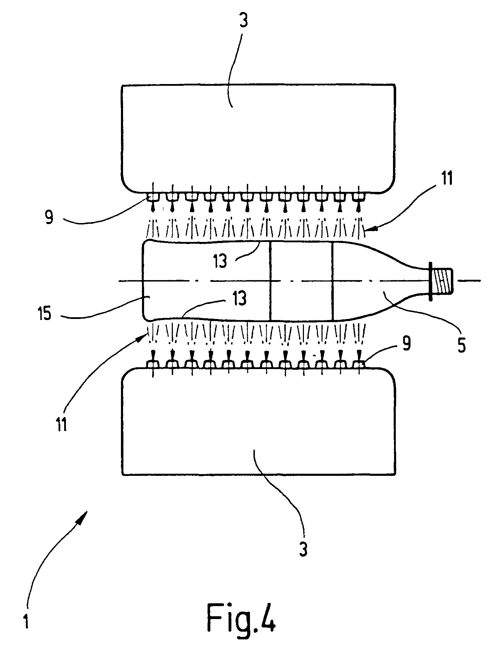

Figur 4 zeigt eine schematische Seitenansicht einer Oberflächenmodifizierungseinheit 1, die ähnlich wie die Oberflächenmodifizierungseinheit 1 gemäss Figur 3 aufgebaut ist. Das kompakte Substrat 5 ist als Hohlkörper 15 ausgebildet. Die Düsen 9 sind längs an dem Brenner 3 so angeordnet, dass sie die Oberfläche 13 des Hohlkörpers 15 in Längsrichtung nahezu vollständig modifizieren können. Der Hohlkörper 15 und die Brenner 3 befinden sich in einer Relativbewegung, so dass in dem ersten Verfahrensschritt nahezu die gesamte Oberfläche 13 von der oxidierenden Flamme behandelt wird, wobei die Gelschicht auf der Oberfläche 13 reduziert wird und Verunreinigungen oxidiert und desorbiert werden. Die so vorbehandelte gereinigte und homogenisierte Oberfläche 13 wird in dem zweiten Verfahrensschritt mit einer silikalisierenden Flamme behandelt, wodurch eine 10 bis 30 nm dicke SiO₂-Schicht aufgetragen wird.

## Claims

1. Method for modifying a surface of a compact substrate, **characterised in that**
• Modification of the surface with at least one oxidising flame;
• Modification of the surface thus produced with at least one silicatising flame in a second step and
• Application of at least one printing ink on the surface.

2. Method according to Claim 1, **characterised in that** the printing ink is liquid, paste-like and/or in powder form and is available as aerosol or spray.

3. Method according to one of the preceding Claims, **characterised in that** at least one printing ink is applied in the screen printing, planographic printing, offset printing, gravure printing, rollflex printing and/or letterpress printing process.

4. Method according to one of the preceding Claims, **characterised in that** the printing ink is selected from the group comprising inorganic pigments, mineral pigments, metal pigments, interference pigments, carbon pigments, organic pigments, organically soluble pigments and/or UV pigments.

5. Method according to one of the preceding Claims, **characterised in that** the organic pigments selected are from the group comprising azopigments, isoindoline pigments, phthalocyanine pigments, polycyclic special pigments, salts of basic pigments, luminescent pigments, dayglow pigments and/or fluorescent pigments.

6. Method according to one of the preceding Claims, **characterised in that** the printing inks are spiked with extenders selected from the group comprising calcium carbonate, aluminium hydroxide, barium sulphate, silicon dioxide, aluminium silicate and/or magnesium silicate.

7. Method according to one of the preceding Claims, **characterised in that** the compact substrate is a glass, a melt, a glass ceramic, a ceramic and/or a crystal and/or any solid whose surface is coated with glass, melt, a glass ceramic, ceramic and/or crystal.

8. Method according to one of the preceding Claims, **characterised in that** the compact substrate is the surface of a PET product.

9. Method according to one of the preceding Claims, **characterised in that** the PET product is a bottle.

10. Method according to one of the preceding Claims, **characterised in that** the compact substrate is a lime soda silicate glass, borosilicate glass, silicate glass, and/or a silicate-free glass, especially a phosphate glass.

11. Method according to one of the preceding Claims, **characterised in that** the glass is sheet glass, container glass, hollow glassware, tableware, a light bulb, television tube, laboratory instrument, lead crystal, fibreglass, fancy glassware, darkened glass, frosted glass, coloured glass, decorative glass and/or optical glass.

## Patentansprüche

1. Verfahren zum Modifizieren einer Oberfläche eines kompakten Substrats, **gekennzeichnet durch**
- Modifizierung der Oberfläche mit mindestens einer oxidierenden Flamme;
- Modifizierung der so erzeugten Oberflächein einem zweiten Schritt mit mindestens einer silikatisierenden Flamme und
- Aufbringung mindestens einer Druckfarbe auf die Oberfläche.

2. Verfahren nach Anspruch 1, **dadurch gekennzeichnet, dass** die Druckfarbe flüssig, pastös und/oder pulverförmig ist und/oder als Aerosol oder Spray vorliegt.

3. Verfahren nach einem der vorhergehenden Ansprüche, **dadurch gekennzeichnet, dass** mindestens eine Druckfarbe im Siebdruck-, Flachdruck-, Offsetdruck-, Tiefdruck-, Rollen-Flexodruck- und/oder Hochdruck-Verfahren aufgebracht wird.

4. Verfahren nach einem der vorhergehenden Ansprüche, **dadurch gekennzeichnet, dass** die Druckfarbe ausgewählt wird aus der Gruppe umfassend anorganische Pigmente, Mineralpigmente, Metallpigmente, interferenzpigmente, Kohlenstoffpigmente, organische Pigmente, organische, lösliche Farbstoffe und/oder UV-Farbstoffe.

5. Verfahren nach einem der vorhergehenden Ansprüche, **dadurch gekennzeichnet, dass** die organischen Pigmente ausgewählt sind aus der Gruppe umfassend Azopigmente, Isoindolin-Pigmente, Phthalocyanin-Pigmente, polycyclische Spezialpigmente, Salze basischer Farbstoffe, Lumineszenzpigmente, Tagesleuchtpigmente und/oder nachleuchtende Pigmente.

6. Verfahren nach einem der vorhergehenden Ansprüche, **dadurch gekennzeichnet, dass** die Druckfarben versetzt sind mit Füllstoffen ausgewählt aus der Gruppe umfassend Calciumcarbonat, Aluminiumoxidhydrat, Bariumsulfat, Siliciumdioxid, Aluminiumsilicat und/oder Magnesiumsilicat.

7. Verfahren nach einem der vorhergehenden Ansprüche, **dadurch gekennzeichnet, dass** das kompakte Substrat ein Glas, eine Schmelze, eine Glaskeramik, eine Keramik und/oder ein Kristall ist und/oder ein beliebiger Feststoff dessen Oberfläche mit Glas, einer Schmelze, Glaskeramik, Keramik und/oder Kristall beschichtet ist.

8. Verfahren nach einem der vorhergehenden Ansprüche, **dadurch gekennzeichnet, dass** das kompakte Substrat die Oberfläche eines PET-Produktes ist.

9. Verfahren nach einem der vorhergehenden Ansprüche, **dadurch gekennzeichnet, dass** das PET-Produkt eine Flasche ist.

10. Verfahren nach einem der vorhergehenden Ansprüche, **dadurch gekennzeichnet, dass** das kompakte Substrat ein Kalk-Natron-Silicat-Glas, Borosilicat-Glas, Silicat-Glas und/oder ein Silicat-freies Glas, insbesondere ein Phosphat-Glas ist.

11. Verfahren nach einem der vorhergehenden Ansprüche, **dadurch gekennzeichnet, dass** das Glas ein Flachglas, ein Behälterglas, ein Hohlglas, ein Wirtschaftsglas, ein Glühlampenglas, ein Fernsehkolbenglas, ein Laborgeräteglas, ein Bleikristallglas, ein Faserglas, ein Schmuckglas, ein Mattglas, ein Milchglas, ein Farbglas, ein Dekorationsglas und/oder ein optisches Glas ist.

## Revendications

1. Méthode de modification de la surface d'un substrat compact, **caractérisée par**
- Modification de la surface avec au moins une flamme oxydante ;
- Modification de la surface ainsi créée, dans un second temps avec au moins une flamme silicatisante et
- Dépôt d'au moins une encre d'impression sur la surface.

2. Méthode d'après la revendication 1, **caractérisée par le fait que** l'encre d'impression se présente sous forme liquide, pâteuse et/ou pulvérulente et/ou est disponible sous forme d'aérosol ou de spray.

3. Méthode d'après l'une des précédentes revendications, **caractérisée par le fait qu'**au moins une encre d'impression est appliquée par une méthode de sérigraphie, d'impression à plat, d'impression offset, d'héliogravure, de flexographie à rouleaux et/ou de typographie.

4. Méthode d'après l'une des précédentes revendications, **caractérisée par le fait que** l'encre d'impression est choisie dans le groupe recouvrant les pigments anorganiques, les pigments minéraux, les pigments métalliques, les pigments d'interférence, les pigments carbonés, les pigments organiques, les colorants organiques solubles et/ou les colorants aux UV.

5. Méthode d'après l'une des précédentes revendications, **caractérisée par le fait que** les pigments organiques sont choisis dans le groupe recouvrant les pigments azoïques, les pigments à l'isoindoline, les pigments à la phtalocyanine, les pigments spéciaux polycycliques, les sels des colorants basiques, les pigments luminescents, les pigments brillant le jour et/ou des pigments postluminescents.

6. Méthode d'après l'une des précédentes revendications, **caractérisée par le fait que** les encres d'impression comportent des matières de charge choisies dans le groupe recouvrant le carbonate de calcium, l'hydroxyde d'aluminium, le sulfate de barium, le dioxyde de silicium, le silicate d'aluminium et/ou le silicate de magnésium.

7. Méthode d'après l'une des précédentes revendications, **caractérisée par le fait que** le substrat compact est un verre, une masse fondue, une vitrocéramique, une céramique et/ou un cristal et/ou un solide quelconque dont la surface est recouverte de verre, d'une masse fondue, de vitrocéramique, de céramique et/ou de cristal.

8. Méthode d'après l'une des précédentes revendications, **caractérisée par le fait que** le substrat compact est formé par la surface d'un produit PETP.

9. Méthode d'après l'une des précédentes revendications, **caractérisée par le fait que** le produit PETP est une bouteille.

10. Méthode d'après l'une des précédentes revendications, **caractérisée par le fait que** le substrat compact est un verre silicosodocalcique, un verre au borosilicate, un verre au silicate et/ou un verre sans silicate, en particulier un verre au phosphate.

11. Méthode d'après l'une des précédentes revendications, **caractérisée par le fait que** le verre est un verre plat, un verre d'emballage, un verre creux, un verre de table, un verre pour ampoules à incandescence, un verre pour tube TV, un verre pour appareil de laboratoire, un verre en cristal de plomb, un verre de fibre, un verre de décoration, un verre laiteux, un verre dépoli, un verre de couleur, un verre de décoration et/ou un verre optique.
